# EUROPÄISCHE PATENTSCHRIFT

(11) **EP 3 261 873 B1**
(45) Veröffentlichungstag und Bekanntmachung des Hinweises auf die Patenterteilung: **13.05.2020**
(21) Anmeldenummer: 16705459.2
(22) Anmeldetag: 10.02.2016
(51) Int. Cl.: B60K 37/06, H01H 23/30, H01H 21/24

(54) **BEDIENEINHEIT FUER EINE FAHRZEUGKOMPONENTE, INSBESONDERE FUER EINE HEIZUNGS-, LUEFTUNGS- UND/ODER KLIMAANLAGE EINES FAHRZEUGS**
OPERATING UNIT FOR A VEHICLE COMPONENT, IN PARTICULAR FOR A HEATING, VENTILATION, AND/OR AIR-CONDITIONING SYSTEM OF A VEHICLE
UNITÉ DE COMMANDE DESTINÉE À UN COMPOSANT DE VÉHICULE, EN PARTICULIER UN SYSTÈME DE CHAUFFAGE, DE VENTILATION ET/OU DE CLIMATISATION D'UN VÉHICULE

(30) Priorität: 23.02.2015 DE 102015203207
(43) Veröffentlichungstag der Anmeldung: 03.01.2018
(73) Patentinhaber: Behr-Hella Thermocontrol GmbH, 70469 Stuttgart (DE)
(72) Erfinder: LOMBERG, Christian, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2016/052792
(87) Internationale Veröffentlichungsnummer: WO 2016/134970

(56) Entgegenhaltungen:
- DE-A1-102006 037 808
- US-A1- 2008 116 048
- US-A1- 2013 256 112

## Beschreibung

Die Erfindung betrifft eine Bedieneinheit für eine Fahrzeugkomponente, bei der es sich insbesondere um ein Radio, ein CD- und/oder DVD- o.dgl. Audio- und/oder Videodatenträger-Abspielgerät, ein Navigationsgerät, ein Infotainment-Gerät eine Heizungs-, Lüftungs- und/oder Klimaanlage oder ein Mensch-Maschine-Interface eines Fahrzeugs handelt.

Bedieneinheiten für Fahrzeugkomponenten sind mit den unterschiedlichsten Bedien- bzw. Betätigungselementen versehen. Neben Tasten, Kipphebeln und Drehknöpfen haben sich unter anderem auch Schaltwippen bewährt, die zumeist an der Vorderseite des Gehäuses angeordnet sind und teilweise in im Regelfall einer von zwei Betätigungsrichtungen betätigbar sind, und zwar nach unten gedrückt oder nach oben "gezogen" werden können. Mit derartigen Schaltwippen oder aber auch mit Drucktasten lässt sich eine Betriebsparametereinstellung durch sogenanntes "Toggeln" vornehmen. Beispiele für Bedieneinheiten der vorstehend beschriebenen Art sind in DE-A-10 2006 037 808, DE-A-10 2006 051 028 und US-A-2013/0256112 beschrieben.

Werden mehrere derartige Schaltwippen als Bedienelementleiste nebeneinander angeordnet, so ist es aus Design-Gründen wünschenswert, dass sämtliche Schaltwippen eine identische Nulllage aufweisen, die Nulllagen-Positionierung und das Nulllagen-Spiel also äußerst exakt und gleichmäßig bzw. äußerst gering ist. Hinzu kommt noch, dass man aus Bedienkomfortgründen bestrebt ist, bei derartigen Schaltwippen nur einen geringen Schalthub zuzulassen.

Aufgabe der Erfindung ist es, eine Bedieneinheit für eine Fahrzeugkomponente, bei der es sich insbesondere um eine Heizungs-, Lüftungs- und/oder Klimaanlage handelt, zu schaffen, die mit einer Schaltwippenleiste mit durch eine einfache Konstruktion erzielbarer exakter Nulllagepositionierung und geringem Nulllagenspiel versehen ist.

Zur Lösung dieser Aufgabe wird mit der Erfindung eine Bedieneinheit für eine Fahrzeugkomponente, insbesondere für eine Heizungs-, Lüftungs- und/oder Klimaanlage eines Fahrzeugs vorgeschlagen, wobei die Bedieneinheit versehen ist mit den Merkmalen des Anspruchs 1. Einzelne Ausgestaltungen der Erfindung sind Gegenstand der Unteransprüche.

Mit der Erfindung wird sinngemäß vorgeschlagen, sämtlichen Schaltwippen ein gemeinsames Trägerelement zuzuordnen, das aus einem rückstellfähigen Material, wie beispielsweise Metall bzw. Federstahl hergestellt ist bzw. dieses Material aufweist und in dem einzelne Biegebalkenabschnitte ausgebildet sind, die die Biegehebel der Schaltwippen bilden. Das Trägerelement ist platten- bzw. streifenförmig ausgebildet und derart in dem Gehäuse der Bedieneinheit fixiert angeordnet, dass sich abstehende, rückstellfähige Biegebalkenabschnitte mit freien Enden bilden. An den freien Enden befindet sich pro Schaltwippe ein manuell betätigbares Bedienelement. Pro Bedienelement ist mindestens ein Biegebalkenabschnitt des Trägerelements vorgesehen. Das bzw. die freien Enden der Biegebalkenabschnitte können von Material umspritzt sein, das die Bedienelemente bildet. Hierbei handelt sich im Regelfall um Kunststoffmaterial.

Mechanisch verbunden mit jedem Bedienelement ist mindestens ein Schalterbetätigungselement, das der Betätigung mindestens eines Schalters dient. Bei Betätigung des Bedienelements wahlweise in einer von zwei im Wesentlichen entgegengesetzten Richtungen betätigt das Schalterbetätigungselement dementsprechend wahlweise einen Schalter oder einen von zwei Schaltern. Jeder Schalter ist mit einem Schaltelement versehen, dass von dem Schalterbetätigungselement betätigt wird, um einen Schaltkontakt des Schalters zu schließen bzw. zu öffnen.

Bei dem Trägerelement handelt es sich vorzugsweise um ein Metall-Stanzteil, das eine Blattfeder bildet. Nach der Erfindung ist vorgesehen, dass das Trägerelement zwei gegenüberliegende Ränder aufweist, längs derer wechselweise einander im Mittenbereich des Trägerelements zwischen dessen Längsrändern sich überlappende erste und zweite Randaussparungen ausgebildet sind, wodurch das Trägerelement im Wesentlichen die Form eines rechteckwellenartigen Materialstreifens mit im Wesentlichen quer zu den Längsrädern des Trägerelements verlaufenden Stegen aufweist, die die Biegebalkenabschnitte bilden.

Der Vorteil der erfindungsgemäßen Konstruktion besteht vor allem darin, dass die Nulllagen-Positionierung der einzelnen Bedienelemente durch die Durchgängigkeit des Trägerelements, bei dem es sich vorzugsweise um eine Blattfeder handelt, und durch den Spritzgussprozess bestimmt ist, bei dem sämtliche Bedienelemente gemeinsam spritzgusstechnisch hergestellt und mit dem Trägerelement verbunden werden. Dadurch lässt sich ein Nulllagenspiel generell eliminieren, wobei dieses Nulllagenspiel ausschließlich von der Steifigkeit des Trägerelements abhängig ist. Schließlich können auch Geräuschbildungen vermieden werden, da die Bedienelemente wegen des nicht vorhandenen bzw. nahezu nicht mehr vorhandenen Lagespiels nicht mehr "klappern" können. Das Trägerelement kann eben oder gewölbt o.dgl. gekrümmt sein. In allen Fällen garantiert die Durchgängigkeit des im Ausgangszustand ebenen Trägerelements bei dessen späterer Verformung in der Einbausituation eine exakte Ausrichtung des Bedienelements mit minimalem Nulllagenspiel.

In weiterer vorteilhafter Ausgestaltung der Erfindung kann vorgesehen sein, dass die Schalter in mindestens einer Ebene angeordnet sind, die parallel zu der Ebene positioniert ist, in der die die Biegehebel bildenden Biegebalkenabschnitte des Trägerelements angeordnet sind. Hierbei kann ferner vorgesehen sein, dass die Schaltelemente der Schalter bei Betätigung durch jeweils ein Schalterbetätigungselement in einer Richtung bewegbar sind, die im Wesentlichen senkrecht zu der Ebene verläuft, in der die die Biegehebel bildenden Biegebalkenabschnitte des Trägerelements angeordnet sind. Durch diese beiden alternativen Ausgestaltungen wird eine flach bauende Konstruktion der Schaltwippenleiste gewährleistet. Eine mechanische Umlenkung der Kipp- bzw. Biegebewegung der Schaltwippen zur Betätigung des bzw. der Schalter ist hierbei nicht erforderlich; vielmehr liegen sämtliche Schalter und Bedienelemente bzw. Biegehebel in verschiedenen Ebenen, die dicht aufeinanderfolgend parallel zueinander angeordnet sind, wobei die Biegehebelebene durch die Ebene, in der das Trägerelement verläuft, definiert ist.

Wie bereits oben erwähnt, bildet die erfindungsgemäße Schaltwippenleiste eine flach bauende Konstruktion. Diesbezüglich von Vorteil ist es, wenn der Biegehebel jeder Schaltwippe durch manuelle Betätigung betreffenden Bedienelements aus einer Ruhelage wahlweise in eine von zwei entgegengesetzten Richtungen biegbar ist, wobei jeder Schaltwippe zwei Schalter zugeordnet sind, von denen jeweils einer durch das Schalterbetätigungselement in Abhängigkeit von der Richtung der Bewegung des Bedienelements betätigbar ist, und wobei die beiden Schalter mit ihren Schaltelementen einander gegenüberliegend angeordnet sind.

Zur Realisierung der zuvor genannten Konstruktion bietet es sich gemäß einer Alternative der Erfindung an, wenn das Schalterbetätigungselement einer Schaltwippe zwischen deren der betreffenden Schaltwippe zugeordneten Schalter positioniert und diese auf einander zugewandten Seiten zweier Platinen angeordnet sind, wobei die beiden Schalter mit ihren Schaltelementen einander zugewandt sind. Alternativ ist es aber auch möglich, wenn das Schalterbetätigungselement jeder Schaltwippe zwei Schalterbetätigungselementarme aufweist, zwischen denen eine Platine angeordnet ist, auf deren einander abgewandten Seiten die beiden der jeweiligen Schaltwippe zugeordneten Schalter mit ihren Schaltelementen einander abgewandt angeordnet sind.

Die einzelnen Schalter lassen sich am einfachsten durch Schaltmatten realisieren, wie es bei Bedienelementen der hier in Rede stehenden Art durchaus üblich ist. Neben mechanisch arbeitenden Schaltern können aber genauso gut auch optisch, mechanisch und/oder kapazitiv arbeitende Schalter, Näherungsschalter, berührungslos arbeitende Schalter o.dgl. eingesetzt werden.

Die Erfindung wird nachfolgend anhand eines Ausführungsbeispiels sowie unter Bezugnahme auf die Zeichnung näher erläutert. Im Einzelnen zeigen dabei:
- Fig. 1: eine perspektivische Ansicht auf die Vorderseite eines Bedienelement-Gehäuses mit Schaltwippenleiste an dessen Vorderseite,
- Fig. 2: einen Schnitt durch das Gehäuse entlang der Linie II-II der Fign. 1 und 5 zur Verdeutlichung der einseitigen Fixierung bzw. Einspannung des Blattfeder-Trägerelements für die Bedienelemente sämtlicher Schaltwippen der Schaltwippenleiste in der Nulllage der Schaltwippen,
- Fign. 3 und 4: jeweils Schnittansichten entsprechend Fig. 2 bei Betätigung einer Schaltwippe jeweils in einer den beiden entgegengesetzten Richtungen,
- Fig. 5: eine Schnittansicht durch das Gehäuse entsprechend der Linie V-V der Fig. 2 und

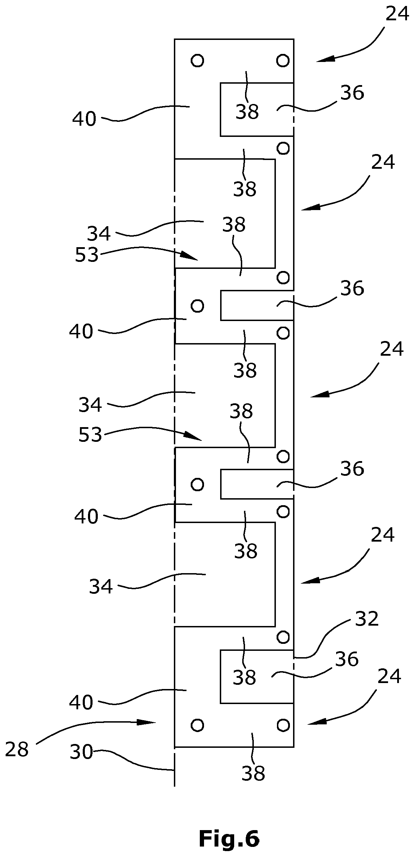

- Fig. 6: eine Draufsicht auf das Blattfeder-Trägerelement, an dem sämtliche Bedienelemente der Schaltwippenleiste angespritzt sind.

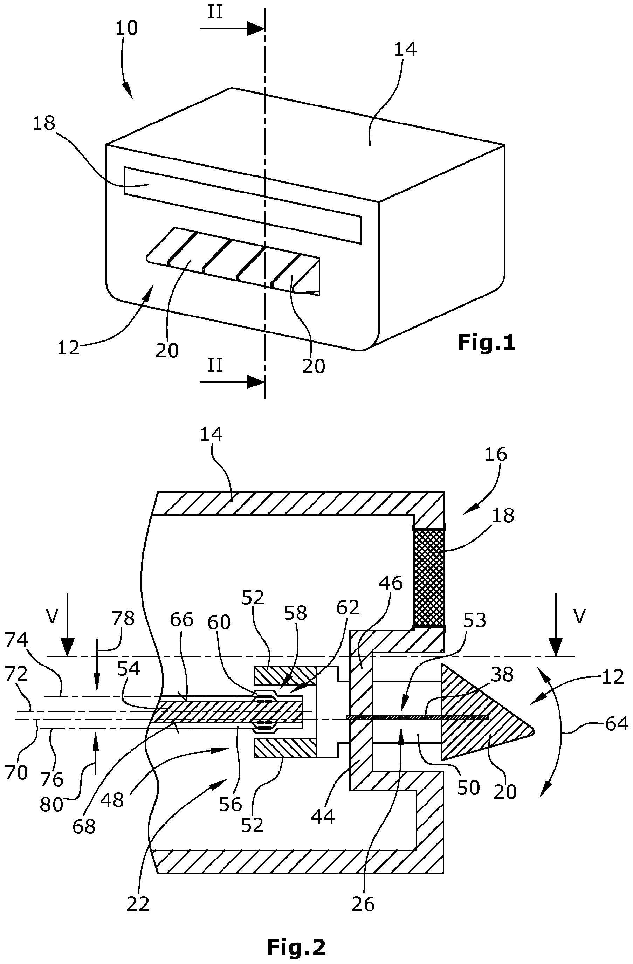

Fig. 1 zeigt eine perspektivische Vorderansicht auf eine Bedieneinheit 10 mit vorderseitig angeordneter Schaltwippenleiste 12, die in einem Gehäuse 14 der Bedieneinheit 10 gehalten ist. Oberhalb der Schaltwippenleiste 12 weist die Vorderseite 16 des Gehäuses 14 beispielsweise ein Display 18 auf.

Im Ausführungsbeispiel gemäß den Figuren weist die Schaltwippenleiste 12 fünf Bedienelemente 20 auf.

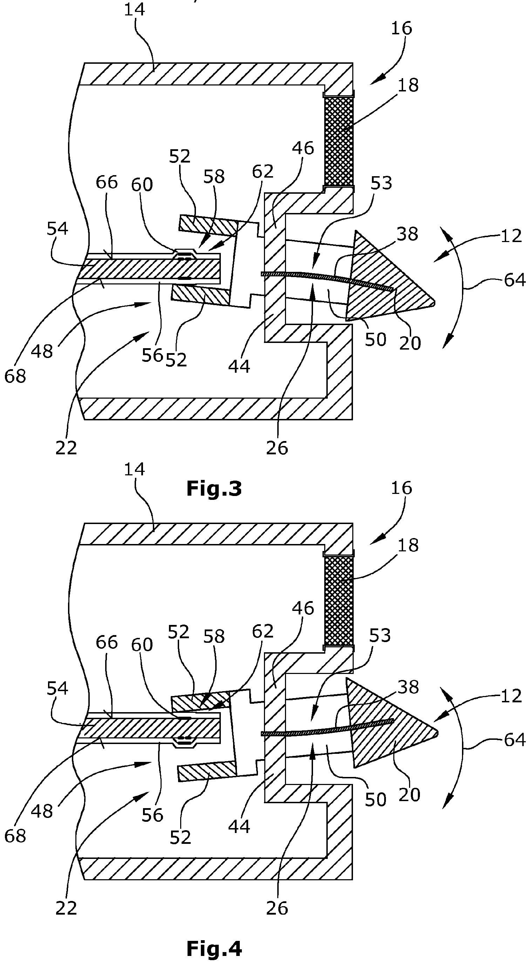

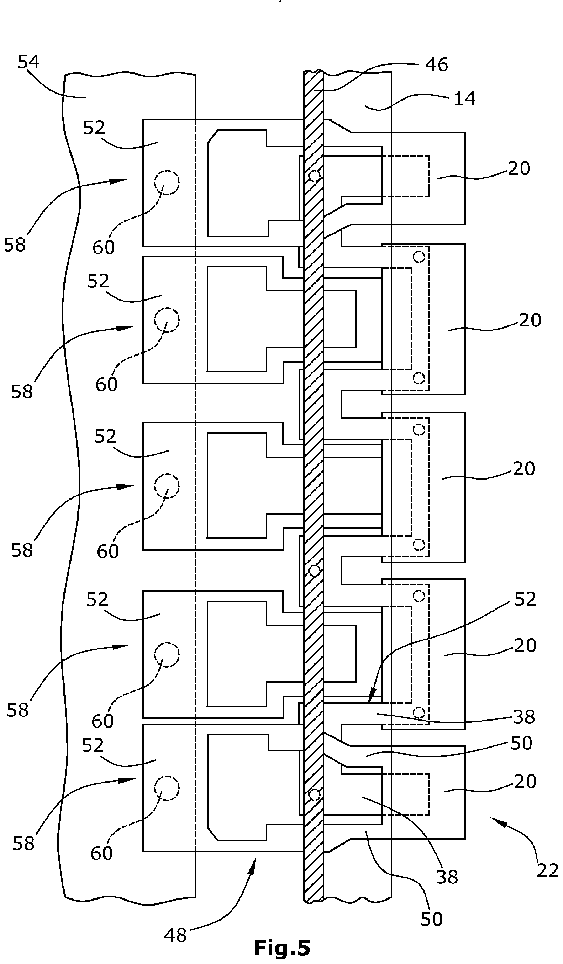

Wie in den Fign. 2 bis 4 gezeigt, ist jede Schaltwippe 22 mit einem Bedienelement 20 versehen, das an einem dem Bedienelement 20 zugeordneten Abschnitt 24 eines gemeinsamen Trägerelements 26 angespritzt ist. Alternativ zur Anspritzung des Bedienelements 20 kann dieses aber auch mit dem betreffenden Abschnitt 24 des Trägerelements 26 verklebt sein. Das Trägerelement 26 ist als Blattfeder 28 z. B. aus Metall ausgebildet und weist eine streifenförmige Erstreckung mit zwei einander gegenüberliegenden Längsrändern 30,32 auf (siehe auch die Fign. 4 und 5). Jeder Längsrand 30,32 ist mit mehreren Randaussparungen 34,36 versehen, die sich im Mittenbereich des Trägerelements 26 überlappen. Auf diese Weise entsteht ein rechteckwellenförmiges Gebilde mit quer zur Längserstreckung des Trägerelements 26 verlaufenden Biegebalkenabschnitten 38, die beidseitig längs beider Längsränder 30,32 durch längsrandabschnitte 40,42 wechselweise verbunden sind.

Entlang der Längsrandabschnitte 40 ist das Blattfeder-Trägerelement 26 innerhalb des Gehäuses 14 fixiert und damit eingespannt gehalten. Hierzu dienen beispielsweise entsprechende Gehäuseabschnitte 44,46 des Gehäuses 14 (siehe beispielsweise die Fign. 2 bis 4).

In den Fign. 2 bis 4 ist ferner gezeigt, dass jedes Bedienelement 20 mit einem Schalterbetätigungselement 48 verbunden ist, das vom Bedienelement 20 aus ins Innere des Gehäuses 14 führt. Das z. B. gabelförmig ausgebildete Schalterbetätigungselement 48 weist zwei mit dem Bedienelement 20 verbundene Seitenstreben 50 auf, zwischen denen an deren dem Bedienelement 20 abgewandten hinteren Enden zwei Schalterbetätigungsarme 52 angeordnet sind. Die Schalterbetätigungselemente 48 erstrecken sich beidseitig eines jeweiligen Biegebalkenabschnitts 38, sofern dieser der einzige einem Bedienelement 20 zugeordnete Biegebalkenabschnitt ist, oder zwischen zwei benachbarten Biegebalkenabschnitten 38, sofern an diesen beiden ein gemeinsames Bedienelement 20 angespritzt oder auf andere Weise befestigt ist (siehe Fig. 5). Die Biegebalkenabschnitte 38 bilden Biegehebel 53 der einzelnen Schaltwippen 22.

Zwischen den beiden nach Art von Platten ausgebildeten Schalterbetätigungsarmen 52 befindet sich, wie die Fign. 2 bis 4 zeigen, eine Platine 54, auf der ober- und unterseitig jeweils eine Schaltmatte 56 aufliegt. Die beiden Schaltmatten 56 weisen pro Schaltwippe 22 jeweils einen Schaltdom 58 auf, der ein Schaltelement 60 eines elektrischen Schalters 62 bildet. Durch Betätigung eines Bedienelements 20 in einer der beiden durch den Doppelpfeil 64 der Fig. 2 gezeigten Richtungen wird entweder der Schalter 62 auf der Oberseite 66 der Platine 54 oder aber der Schalter 62 auf der Unterseite 68 der Platine 54 betätigt.

In den Fign. 2 bis 4 ist erkennbar, dass die Schaltwippenleiste 12 einen vorteilhafterweise flachen Aufbau aufweist. Die Biegebalkenabschnitte 38 bzw. die Biegehebel 53 befinden sich in einer gemeinsamen ersten Ebene 70. Parallel zu dieser Ebene 70 verläuft die Platineebene 72. In wiederum zu diesen beiden Ebenen 70,72 parallelen Ebenen 74,76 sind die Schalter 62 angeordnet. Die Schalter 62 selbst sind durch Bewegung ihrer Schaltdome 58 in zu den Ebenen 74,76 jeweils senkrechter Richtung 78,80 betätigbar.

Neben dem flachen Aufbau kann als weiterer Vorteil des erfindungsgemäßen Konzepts angegeben werden, dass sämtliche Bedienelemente 20 ein und dieselbe Nulllage aufweisen, die durch das Trägerelement 26 definiert ist.

Anstelle einer einzigen Platine 54 mit beidseitig der Platine angeordneten Schaltern 62 ist es auch möglich, die beiden Schalter auf den einander zugewandten (Innen-)Seiten zweier beabstandeter Platinen anzuordnen, zwischen denen dann das Schalterbetätigungselement 48 einer Schaltwippe 22 hineinragt, die dann wahlweise in Abhängigkeit von der Betätigungsrichtung (Doppelpfeil 64) eines Bedienelements 20 einen dieser beiden Schalter betätigt. Schließlich ist es auch möglich, dass die Schalter 62 an den Schalterbetätigungselementen 48 angeordnet sind, die in diesem Fall dann mit feststehenden Elementen, gegen die die Schalter 62 bei Betätigung eines Bedienelements 20 bewegt werden, zusammenwirken, um die Schaltkontakte auszulösen.

### BEZUGSZEICHENLISTE

- 10: Bedieneinheit
- 12: Schaltwippenleiste der Bedieneinheit 10
- 14: Gehäuse der Bedieneinheit 10
- 16: Außenseite des Gehäuses 14
- 18: Display der Bedieneinheit 10
- 20: Bedienelemente der Schaltwippenleiste 12
- 22: Schaltwippe
- 24: Abschnitte des Trägerelements 20, an denen die Bedienelemente 20 angebracht sind
- 26: Blattfeder-Trägerelement
- 28: Blattfeder
- 30: Längsränder der Blattfeder 28
- 32: Längsränder der Blattfeder 28
- 34: Randaussparungen in dem Längsrand 30
- 36: Randaussparungen in dem Längsrand 32
- 38: Biegebalkenabschnitt der Blattfeder 28
- 40: Längsrandabschnitte der Blattfeder 28
- 44: Gehäuseabschnitte des Gehäuses 14
- 46: Gehäuseabschnitte des Gehäuses 14
- 48: Schalterbetätigungselement einer Schaltwippe 22
- 50: Seitenstreben des Schalterbetätigungselement 48
- 52: Schalterbetätigungsarme des Schalterbetätigungselement 48
- 53: Biegehebel der Schaltwippen 22
- 54: Platine
- 56: Schaltmatten auf der Platine 54
- 58: Schaltdome der Schaltmatten 56
- 60: Schaltelemente der Schaltmatten 56
- 62: elektrische Schalter
- 64: Doppelpfeil (Betätigungsrichtungen der Schaltwippen 22)
- 66: Oberseite der Platine 54
- 68: Unterseite der Platine 54
- 70: (erste) Ebene der Biegebalkenabschnitte 38 bzw. Biegehebel 53
- 72: Platineebene
- 74: eine Ebene der Schalter 62
- 76: eine weitere Ebene der Schalter 62
- 78: Richtung der Schaltdombewegung
- 80: senkrechter Richtung der Schaltdombewegung

## Patentansprüche

1. Bedieneinheit für eine Fahrzeugkomponente, insbesondere für eine Heizungs-, Lüftungs- und/oder Klimaanlage eines Fahrzeugs, mit
- einem Gehäuse (14),
- mehreren Schaltwippen (22), die in oder an dem Gehäuse (14) angeordnet sind und die jeweils mindestens einen biegbaren Biegehebel (53) aufweisen,
- einem den Schaltwippen (22) gemeinsamen, platten- oder streifenförmigen Trägerelement (26) aus einem rückstellfähigen Material, insbesondere aus Metall,
- wobei das Trägerelement (26) innerhalb des Gehäuses (14) fixiert ist und den jeweiligen Schalterwippen (22) zugeordnete, rückstellfähige Biegebalkenabschnitte (38) aufweist, die die Biegehebel (53) der Schaltwippen (22) bilden,
- wobei jede Schaltwippe (22) ein manuell betätigbares Bedienelement (20) aufweist, das mechanisch mit dem den Biegehebel (53) der betreffenden Schaltwippe (22) zugeordneten Biegebalkenabschnitt (38) verbunden ist,
- wobei die Bedienelemente (20) der Schaltwippen (22) nebeneinanderliegend an einer Außenseite des Gehäuses (16) angeordnet sind und
- wobei jede Schaltwippe (22) ferner mit mindestens einem Schalterbetätigungselement (48) versehen ist, das mechanisch mit dem Bedienelement (20) der betreffenden Schaltwippe (22) verbunden ist, und
- mindestens einem ein Schaltelement (60) aufweisenden Schalter (62) pro Schaltwippe (22), der bei manueller Betätigung des Bedienelements (20) der betreffenden Schaltwippe (22) durch deren Schalterbetätigungselement (48) betätigbar ist,
**dadurch gekennzeichnet, dass**
das Trägerelement (26) zwei gegenüberliegende Längsränder (30,32) aufweist, längs derer wechselweise einander im Mittenbereich des Trägerelements (26) zwischen dessen Längsrändern (30,32) sich überlappende erste und zweite Randaussparungen (34,36) ausgebildet sind, wodurch das Trägerelement (26) im Wesentlichen die Form eines rechteckwellenartigen Materialstreifens mit im Wesentlichen quer zu den Längsrädern des Trägerelements (26) verlaufenden Stegen aufweist, die die Biegebalkenabschnitte (38) bilden.

2. Bedieneinheit nach Anspruch 1, **dadurch gekennzeichnet, dass** die Schalter (62) in mindestens einer Ebene (74,76) angeordnet sind, die parallel zu der Ebene (70) positioniert ist, in der die die Biegehebel (53) bildenden Biegebalkenabschnitte (38) des Trägerelements (26) angeordnet sind.

3. Bedieneinheit nach Anspruch 1 oder 2, **dadurch gekennzeichnet, dass** die Schaltelemente (60) der Schalter (62) bei Betätigung durch jeweils ein Schalterbetätigungselement (48) in einer Richtung (78,80) bewegbar sind, die im Wesentlichen senkrecht zu der Ebene (70) verläuft, in der die die Biegehebel (53) bildenden Biegebalkenabschnitte (38) des Trägerelements (26) angeordnet sind.

4. Bedieneinheit nach einem der Ansprüche 1 bis 3, **dadurch gekennzeichnet, dass** der Biegehebel (53) jeder Schaltwippe (22) durch manuelle Betätigung des betreffenden Bedienelements (20) aus einer Ruhelage wahlweise in eine von zwei entgegengesetzten Richtungen (64) biegbar ist und dass jeder Schaltwippe (22) zwei Schalter (62) zugeordnet sind, von denen einer durch das Schalterbetätigungselement (48) in Abhängigkeit von der Richtung (64) der Bewegung des Bedienelements (20) betätigbar ist, wobei die beiden Schalter (62) mit ihren Schaltelementen (60) einander gegenüberliegend angeordnet sind.

5. Bedieneinheit nach einem der Ansprüche 1 bis 4, **dadurch gekennzeichnet, dass** das Schalterbetätigungselement (48) jeder Schaltwippe (22) zwischen deren beiden Schaltern (62) positioniert ist und dass die beiden einer Schaltwippe (22) zugeordneten Schalter (62) auf einander zugwandten Seiten zweier Platinen angeordnet sind, wobei die beiden Schalter (62) mit ihren Schaltelementen (60) einander zugewandt sind.

6. Bedieneinheit nach einem der Ansprüche 1 bis 5, **dadurch gekennzeichnet, dass** das Schalterbetätigungselement (48) jeder Schaltwippe (22) zwei Schalterbetätigungselementarme (52) aufweist, zwischen denen eine Platine (54) angeordnet ist, auf deren einander abgewandten Seiten die beiden der jeweiligen Schaltwippe (22) zugeordneten Schalter (62) mit ihren Schaltelementen (60) einander abgewandt angeordnet sind.

7. Bedieneinheit nach einem der Ansprüche 1 bis 6, **dadurch gekennzeichnet, dass** die Schalter (62) mechanisch, optisch, magnetisch und/oder kapazitiv arbeiten.

## Claims

1. An operating unit for a vehicle component, in particular for a heating, ventilation and/or air conditioning system of a vehicle, comprising
- a housing (14),
- a plurality of rocker switches (22) which are arranged in or at the housing (14) and each of which comprises at least one bendable bending lever (53),
- a plate-shaped or strip-shaped support element (26) common for each rocker switch (22) and made of a resilient material, in particular of metal,
- wherein the support element (26) is fixed within the housing (14) and comprises resilient bending bar portions (38) assigned to the respective rocker switches (22) and forming the bending levers (53) of the rocker switches (22),
- wherein each rocker switch (22) comprises a manually actuatable operating element (20) which is mechanically connected to the bending bar portion (38) being assigned to the bending lever (53) of the corresponding rocker switch (22),
- wherein the operating elements (20) of the rocker switches (22) are arranged adjacently on an outside of the housing (16), and
- wherein each rocker switch (22) is further provided with at least one switch actuating element (48) which is mechanically connected to the operating element (20) of the corresponding rocker switch (22), and
- at least one switch (62) per rocker switch (22) which comprises a switching element (60), wherein the at least one switch (62) is actuatable upon manual actuation of the operating element (20) of the corresponding rocker switch (22) by the switch actuating element (48) of the rocker switch,
**characterized in that**
the support element (26) comprises two opposite longitudinal edges (30, 32) along which overlapping first and second edge recesses (34, 36) are formed alternately in the central area of the support element (26) between the longitudinal edges (30, 32) of the support element (26), whereby the support element (26) substantially comprises the form of a rectangular wave-like material strip with webs being substantially transverse to the longitudinal edges of the support element (26), wherein the webs form the bending bar portions (38).

2. The operating unit according to claim 1, **characterized in that** the switches (62) are arranged in at least one plane (74, 76) which is arranged in parallel to the plane (70) in which the bending bar portions (38) of the support element (26) forming the bending levers (53) are arranged.

3. The operating unit according to claim 1 or 2, **characterized in that** the switching elements (60) of the switches (62) are movable upon actuation by respectively one switch actuating element (48) in a direction (78, 80) substantially perpendicular to the plane (70) in which the bending bar portions (38) of the support element (26) forming the bending levers (53) are arranged.

4. The operating unit according to any one of claims 1 to 3, **characterized in that** the bending lever (53) of each rocker switch (22) is bendable upon manual actuation of the corresponding operating element (20) from a resting position to optionally one of two opposite directions (64), and that each rocker switch (22) is assigned two switches (62), one of which is actuatable by the switch actuating element (48) depending on the direction (64) of movement of the operating element (20), wherein the two switches (62) are arranged with their switching elements (60) opposite to each other.

5. The operating unit according to any one of claims 1 to 4, **characterized in that** the switch actuation element (48) of each rocker switch (22) is positioned between the two switches (62) of the switch actuation element (48), and that the two switches (62) assigned to a rocker switch (22) are arranged on circuit board sides facing each other, wherein the two switches (62) are arranged with their switching elements (60) facing each other.

6. The operating unit according to any one of claims 1 to 5, **characterized in that** the switch actuating element (48) of each rocker switch (22) comprises two switch actuating element arms (52) between which a circuit board (54) is arranged on whose sides facing away from each other the two switches (62) assigned to the respective rocker switch (22) are arranged with their switching elements (60) facing away from each other.

7. The operating unit according to any one of claims 1 to 6, **characterized in that** the switches (62) operate in a mechanical, optical, magnetic and/or capacitive manner.

## Revendications

1. Unité de commande d'un composant de véhicule, en particulier d'un système de chauffage, de ventilation et/ou de climatisation d'un véhicule, ladite unité de commande comprenant
- un boîtier (14),
- une pluralité de bascules de commutation (22) qui sont disposés dans ou sur le boîtier (14) et qui comportent chacun au moins un levier de flexion souple (53),
- un élément porteur (26) commun aux bascules de commutation (22) en forme de plaque ou de bande et réalisé à partir d'un matériau élastique, notamment un métal,
- l'élément porteur (26) étant fixé à l'intérieur du boîtier (14) et comportant des portions de poutre de flexion élastique (38) associées aux bascules de commutation respectifs (22), qui forment les leviers de flexion (53) des commutateurs à bascule (22),
- chaque bascule de commutation (22) comportant un élément de commande (20) actionnable manuellement qui est relié mécaniquement à la portion de poutre de flexion (38) associée au levier de flexion (53) de la bascule de commutation correspondante (22),
- les éléments de commande (20) des bascule de commutation (22) étant disposés côte à côte sur un côté extérieur du boîtier (16) et
- chaque bascule de commutation (22) étant en outre pourvue d'au moins un élément d'actionnement de commutateur (48) qui est relié mécaniquement à l'élément de commande (20) de la bascule de commutation correspondant (22), et
- au moins un commutateur (62), comportant un élément de commutation (60), par bascule de commutation (22), lequel commutateur peut être actionné, lors de l'actionnement manuel de l'élément de commande (20) de la bascule de commutation correspondante (22), par l'élément d'actionnement de commutateur (48) de celle-ci,
**caractérisée en ce que**
l'élément porteur (26) comporte deux bords longitudinaux opposés (30, 32) le long desquels sont ménagés des premier et deuxième évidements de bord (34, 36) se chevauchant dans la région centrale de l'élément porteur (26) entre les bords longitudinaux (30, 32) de celui-ci, ce pour qui l'élément porteur (26) a sensiblement la forme d'une bande de matériau de type à ondes rectangulaires qui est pourvue de nervures s'étendant sensiblement transversalement aux roues longitudinales de l'élément porteur (26) et qui forment les portions de poutre de flexion (38).

2. Unité de commande selon la revendication 1, **caractérisée en ce que** les commutateurs (62) sont disposés dans au moins un plan (74, 76) qui est positionné parallèlement au plan (70) dans lequel sont disposées les portions de poutre de flexion (38), formant le levier de flexion (53), de l'élément porteur (26) .

3. Unité de commande selon la revendication 1 ou 2, **caractérisée en ce que** les éléments de commutation (60) des commutateurs (62), lorsqu'ils sont chacun actionnés par un élément d'actionnement de commutateur correspondant (48), peuvent être déplacés dans une direction (78, 80) qui est sensiblement perpendiculaire au plan (70) dans lequel sont disposées les portions de poutre de flexion (38), formant les leviers de flexion (53), de l'élément porteur (26).

4. Unité de commande selon l'une des revendications 1 à 3, **caractérisée en ce que** le levier de flexion (53) de chaque bascule de commutation (22) peut être plié d'une position de repos sélectivement dans l'une des deux directions opposées (64) par actionnement manuel de l'élément de commande correspondant (20) et **en ce que** chaque bascule de commutation (22) est associée à deux commutateurs (62) dont l'un peut être actionné par l'élément d'actionnement de commutateur (48) en fonction de la direction (64) du mouvement de l'élément de commande (20), les deux commutateurs (62) étant disposés avec leurs éléments de commutation (60) en face l'un de l'autre.

5. Unité de commande selon l'une des revendications 1 à 4, **caractérisée en ce que** l'élément d'actionnement de commutateur (48) de chaque bascule de commutation (22) est positionné entre les deux commutateurs (62) de celle-ci et **en ce que** les deux commutateurs (62), associés à une bascule de commutation (22), sont disposés des côtés, dirigés l'un vers l'autre, de deux cartes de circuits imprimés, les deux commutateurs (62) étant dirigés avec leurs éléments de commutation (60) l'un en face de l'autre.

6. Unité de commande selon l'une des revendications 1 à 5, **caractérisée en ce que** l'élément d'actionnement de commutateur (48) de chaque bascule de commutation (22) comporte deux bras d'élément d'actionnement de commutateur (52) entre lesquels est disposée une carte de circuit imprimé (54) sur des côtés opposés de laquelle les deux commutateurs (62), associés à la bascule de commutation correspondante (22), sont disposés avec leurs éléments de commutation (60) à l'opposé l'un de l'autre.

7. Unité de commande selon l'une des revendications 1 à 6, **caractérisée en ce que** les commutateurs (62) fonctionnent de manière mécanique, optique, magnétique et/ou capacitive.
